# EUROPEAN PATENT SPECIFICATION

(11) **EP 3 045 761 B1**
(45) Date of publication and mention of the grant of the patent: **13.03.2019**
(21) Application number: 15169275.3
(22) Date of filing: 26.05.2015
(51) Int. Cl.: F16D 65/56

(54) **AUTOMATIC BRAKE ADJUSTMENT APPARATUS**
VORRICHTUNG ZUR AUTOMATISCHEN BREMSEINSTELLUNG
APPAREIL DE RÉGLAGE AUTOMATIQUE DE FREINS

(30) Priority: 07.01.2015 TW 104100414
(43) Date of publication of application: 20.07.2016
(73) Proprietor: Ming Horng Industrial Co., Ltd., Kaohsiung (TW)
(72) Inventor: Tseng, Chyuan-Yow, Kaohsiung (TW); Chiu, Yu-Hsiang, Kaohsiung (TW); Teng, Chih-Shih, Kaohsiung (TW)
(74) Representative: Lang, Christian

(56) References cited:
- EP-A1- 2 626 589
- GB-A- 2 088 501
- GB-A- 2 206 663
- US-A- 4 494 633
- US-A1- 2008 257 099
- US-B2- 8 631 911

## Description

### BACKGROUND OF THE INVENTION

### 1. Field of the Invention

The present invention relates to brake technology and more particularly, to an automatic brake adjustment apparatus adapted for automatically adjusting the length of a braking wire of a drum type braking device so as to further adjust the clearance between a brake shoe and a brake drum.

### 2. Description of the Related Art

Regular drum type braking devices have good self-braking effect. Under the condition of generating the same braking torque, the diameter of the brake drum of a drum type braking device can be much smaller than the diameter of the brake disc of a disc type braking device. Further, drum type braking devices have the advantages of low component cost and ease of maintenance. Therefore, drum type braking devices are widely used in the brake systems of cars, motorcycles, bicycles and other vehicles.

However, the brake shoe of a drum type braking device wears quickly with use. When the brake shoe starts to wear, the clearance between the brake shoe and the brake drum will be relatively increased. When this problem occurs, the pulling distance of the braking wire must be relatively increased so that the brake shoe can be positively pulled to rub against the brake drum, in other words, the user must heavily press the brake lever or brake pedal to prolong the stroke, producing the same expected braking force.

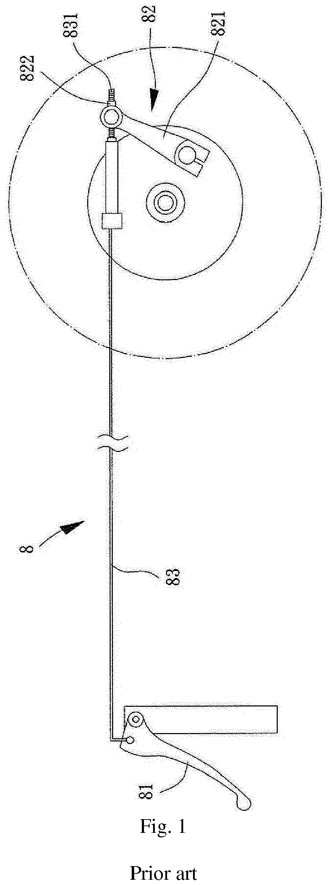

More specifically, as illustrated in FIG. 1, a conventional drum type braking device **8** generally comprises a brake lever **81**, a brake unit **82** and a brake cable **83.** The brake cable **83** connects the brake lever **81** and a screw rod **831**. The brake unit **82** comprises a swinging arm **821** is pivotally connected to the screw rod **831** with a screw nut **822**. The screw nut **822** is threaded onto the screw rod **831**. Thus, when the user presses the brake lever **81**, the brake cable **83** is pulled by the brake lever **81**, moving the screw nut **822** into abutment against the swinging arm **821**, and thus, the swinging arm **821** is driven to extend out the brake shoe (not shown). When brake shoe is extended out, it is forced to rub against the brake drum at the wheel rim, thereby producing a braking force.

When the brake shoe is getting worn out after a long use, the clearance between the brake shoe and the brake drum is increased. When this problem occurs, the user needs to extend the stroke of the brake lever **81** so that the brake shoe can be moved to rub against the brake drum positively in producing the expected braking effect. Under this condition, the screw nut **822** of this prior art drum type braking device **8** must be rotated manually to move the swinging arm **821** in direction toward the brake cable **83** for stretching the brake shoe outwards, adjusting the clearance between the brake shoe and the brake drum to the designed level for maintaining the braking effect of the braking device **8.**

However, to a user who is not familiar with vehicle maintenance, the adjustment of the screw nut **822** must be relied on a professional maintenance personnel. In this case, the position of the swinging arm **821** cannot be adjusted through the screw nut **822** in time, thus, the insufficient braking force can lead to an increase in the braking distance, seriously endangering the driving safety. Further, in order to prevent the occurrence of the aforesaid problem, a maintenance personnel may heavily rotate the screw nut **822** to greatly shorten the clearance between the brake shoe and the brake drum, enabling the worn out brake shoe of the braking device **8** to achieve a certain level of braking effect. However, if the clearance between the brake shoe and the brake drum is excessively small, the braking operation can be too sensitive, an unexpected braking action (such as, skidding with locked wheel) can occur if the user accidentally presses the brake lever **81**, resulting in an accident.

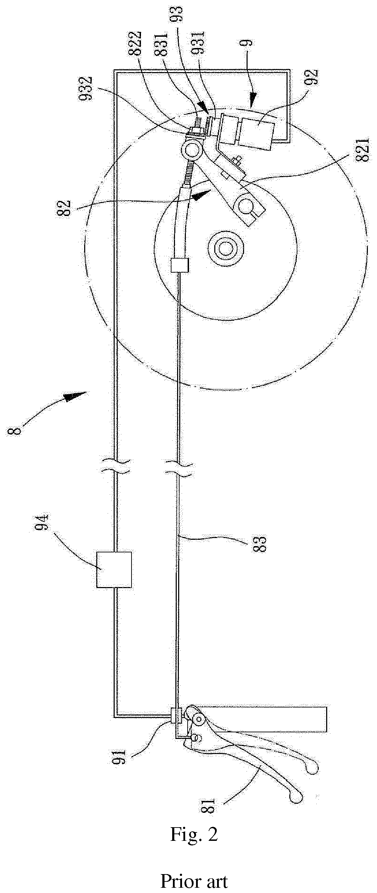

In order to solve the aforesaid problem, as shown in FIG. 2, a conventional automatic brake adjustment apparatus **9** was created for use in the aforesaid conventional braking device **8**. This conventional design of automatic brake adjustment apparatus **9** comprises a trigger switch **91**, a power drive **92**, a gear set **93**, and a control unit **94**. The trigger switch **91** is linked to the brake lever **81**. The power drive **92** is fixedly mounted at the swinging arm **821** of the brake unit **82**. The gear set **93** comprises a first gear member **931** and a second gear member **932** meshed together. The first gear member **931** is joined to the power drive **92** and drivable by the power drive **92** directly. The second gear member **932** is connected to the screw nut **822** of the brake unit **82** for synchronous movement. The control unit **94** is coupled with the trigger switch **91** and the power drive **92**. This prior art automatic brake adjustment apparatus **9** is disclosed in Taiwan Patent 549283, entitled "Electrical motorcycle brake automatic compensating device.

By means of the arrangement of the automatic brake adjustment apparatus **9**, when the brake shoe is getting to wear out and the clearance between the brake shoe and the brake drum is increased, the stroke of the brake lever **81** pressed by the user will be increased, causing the trigger switch **91** to be triggered. Triggering the trigger switch **91** causes the control unit **94** to start up the power drive **92.** Starting up the power drive **92** can drive the first gear member **931** to rotate the second gear member **932** and the screw nut **822**, biasing the swinging arm **821** toward the braking wire **83** to expand the brake shoe, and thus, the clearance between the brake shoe and the brake drum can be adjusted and returned to the level before wearing of the brake shoe. Thus, this prior art automatic brake adjustment apparatus **9** can maintain a constant clearance between the brake shoe and the brake drum, effectively controlling the range of variation of the braking effect of the braking device **8**.

However, due to the use of the trigger switch **91**, power drive **92** and control unit **94** in the automatic brake adjustment apparatus **9**, this prior art design has the disadvantages of high cost, high failure rate and maintenance difficulty. Because low cost and ease of maintenance are the advantages of conventional drum type braking devices, the use of the aforesaid prior art automatic brake adjustment apparatus **91** will significantly reduce the market value of the drum type braking device, and will be obviously unable to meet the industry's needs. Further, the power drive **92** must be fixedly mounted at the swinging arm **821** of the brake unit **82.** However, existing vehicle brake systems do not provide sufficient space for accommodating the power drive **92.** Further, the swinging arms **821** in regular vehicles have no means for the mounting of the power drive **92.** In other words, the aforesaid prior art automatic brake adjustment apparatus **9** is neither suitable for existing vehicles, nor separately sellable for installation by users, narrowing the range of applications. Further, the aforesaid prior art automatic brake adjustment apparatus **9** needs to have the trigger switch **91** be installed in the brake lever or brake pedal and the control unit **94** be electrically coupled with the trigger switch **91** and the power drive **92** with electric wires, and therefore, this prior art automatic brake adjustment apparatus **9** cannot be used in a motorcycle or bicycle where the motorcycle or bicycle body space is limited.

In general, the aforesaid prior art automatic brake adjustment apparatus **9** has the drawbacks of high cost and limited range of applications. Therefore, it is desirable to provide an improved design of automatic brake adjustment apparatus for use in a regular drum type braking device to maintain a constant clearance between the brake shoe and brake drum of the braking device, ensuring the braking effect of the breaking device and a high level of vehicle safety.

From US 2008/0257099 A1 a device for automatically adjusting the pre-tension of a pulling element like a brake cable is known. The device comprises a housing in which a mounting frame is movable disposed. The mounting frame is connected with a compressing spring and a spindle. The spindle is connected with a rotation disk having a bearing tip, whereat the spindle can only rotate, resulting in a movement of the mounting frame, if a certain pre-tension is undercut.

Patent application publication GB 2 088 501 A discloses an operating system for automatically adjusting the play of the control wire of a vehicle brake. On the control wire a drive member is fixed that abuts on an arm of an adjust lever, if the stroke of the brake lever of the vehicle is too great. The other arm of the adjust lever disengages a gear being mounted on a sleeve shaped adjustor, rotation of which reduces the play of the control wire.

### SUMMARY OF THE INVENTION

The present invention has been accomplished under the circumstances in view. It is the main object of the present invention to provide an automatic brake adjustment apparatus consisting of a frame, a first adjustment member, a second adjustment member and an adjustment fork for installation in a drum type braking device. When the brake shoe of the breaking device gets worn out, the pulling distance of the positioning seat and coupling member of the frame, the first adjustment member and the second adjustment member can be relatively increased for allowing the adjustment fork to be rotated relative to the positioning seat to further bias the first adjustment member in reducing the distance between the first adjustment member and the second adjustment member, and thus the length of the breaking wire can be automatically adjusted, maintaining a constant clearance between the brake shoe and brake drum of the breaking device and ensuring the braking effect of the breaking device and a high level of vehicle safety.

It is another object of the present invention to provide an automatic brake adjustment apparatus, which can be conveniently installed in a braking device for controlling the clearance between a brake shoe and a brake drum of the braking device by connecting a frame and a second adjustment member thereof respectively to a brake cable and a braking wire of the braking device, increasing the range of applications.

To achieve these and other objects of the present invention, an automatic brake adjustment apparatus comprises a frame, which comprises an accommodation chamber, a positioning seat movably mounted in the accommodation chamber, a coupling member having its one end connected to the positioning seat and its other end connected to a brake cable and a stop member protruding into the accommodation chamber, a first adjustment member rotatably mounted at the positioning seat of the frame and comprising a gear and a first threaded portion, a second adjustment member comprising a second threaded portion meshed with the first threaded portion and a connection member connected to the braking wire of the braking device, an adjustment fork pivotally connected to the positioning seat and comprising an end portion facing toward the gear of the first adjustment member and an abutment edge facing toward the stop member, and a pullback spring connected between the positioning seat and the adjustment fork for pulling the end portion of the adjustment fork in direction toward the positioning seat.

Preferably, the frame comprises a first side panel, and a second side panel opposite to the first side panel. The first side panel and the second side panel each have a through hole therein. The coupling member has its one end connected to one side of the positioning seat that faces toward the first side panel, and its other end inserted through the through hole of the first side panel to the outside of the frame for the connection of the brake cable.

Preferably, the first adjustment member comprises a pivot connection portion pivotally connected to one side of the positioning seat that faces toward the second side panel. The pivot connection portion of the first adjustment member and the gear are disposed in the accommodation chamber of the frame. The first threaded portion is located at one end of the first adjustment member remote from the pivot connection portion. Further, the first threaded portion is inserted through the through hole of the second side panel to the outside of the frame for meshing with the second threaded portion of the second adjustment member.

Preferably, the stop member is located at the first side panel, and protruded from the first side panel into the inside of the accommodation chamber.

Preferably, the end portion of the adjustment fork is positioned in one tooth groove of the gear.

Preferably, the automatic brake adjustment apparatus further comprises a holder shell. Further, the second adjustment member is configured to provide an outer surface that can be a planar surface or other non-arc surface. The outer surface of the second adjustment member is disposed perpendicular to a long axis of the frame. The holder shell is abutted against the outer surface of the second adjustment member in a surface contact manner.

Preferably, the abutment edge of the adjustment fork defines with the long axis of the frame a contained angle smaller than 90-degrees.

Preferably, the adjustment fork comprises a shifting piece and a stop block put together. The end portion is located at the shifting piece. The abutment edge is located at the stop block. Further, the shifting piece and the stop block are respectively pivotally connected to the positioning seat of the frame.

The stop member comprises an adjustment component adapted for adjusting the protruding distance of the stop member in the accommodation chamber.

Preferably, the frame further comprises a pushing member located at the second side panel and protruded from the second side panel into the accommodation chamber. The pushing member is disposed to face toward the adjustment fork. Further, an elastic member can be set between the pushing member and the second side panel.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a schematic drawing illustrating a drum type braking device according to the prior art.
FIG. 2 illustrates a conventional automatic brake adjustment apparatus used in the prior art drum type braking device
FIG. 3 is a schematic drawing illustrating an automatic brake adjustment apparatus used in a drum type braking device in accordance with the present invention.
FIG. 4 is an enlarged view of the automatic brake adjustment apparatus shown in FIG. 3.
FIG. 5 is an exploded view of the automatic brake adjustment apparatus in accordance with the present invention.
FIG. 6 is a schematic sectional view of the automatic brake adjustment apparatus in accordance with the present invention.
FIG. 7 is a sectional view taken along line A-A of FIG. 6.
FIG. 8 is a schematic sectional view of the present invention, illustrating an operation status of the automatic brake adjustment apparatus in a short pulling range.
FIG. 9 is an enlarged view of a part of FIG. 8, illustrating the gear rotated within a small angle.
FIG. 10 is a schematic sectional view of the present invention, illustrating the adjustment fork largely biased.
FIG. 11 is an enlarged view of a part of FIG. 10, illustrating the gear rotated through a relatively larger angle.
FIG. 12 corresponds to FIG. 11, illustrating the adjustment fork returned.

### DETAILED DESCRIPTION OF THE INVENTION

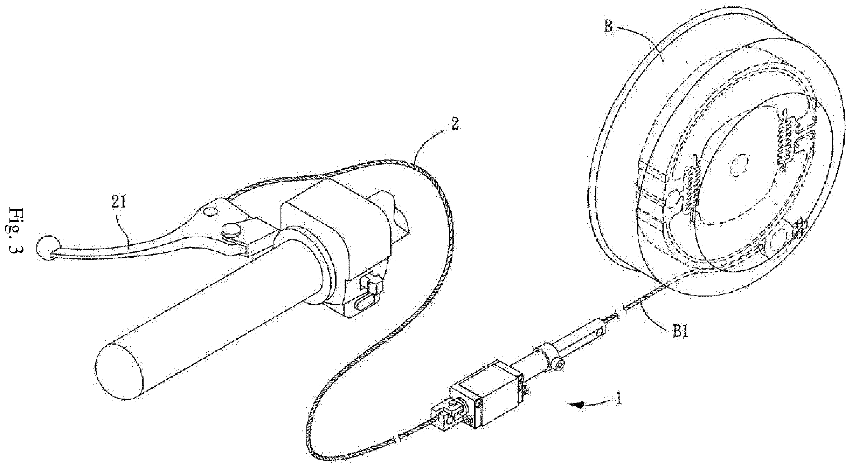

Referring to FIGS. 3, 4 and 5, an automatic brake adjustment apparatus **1** in accordance with the present invention is shown. The automatic brake adjustment apparatus **1** comprises a frame **11**, a first adjustment member **12**, and a second adjustment member **13**. The first adjustment member **12** is coupled to the frame **11** and the second adjustment member **13.**

The frame **11** is mountable at a frame or body of a vehicle (such as car, motorcycle), defining therein an accommodation chamber **R.** The frame **11** has a positioning seat **111** and a coupling member **112** mounted therein. Further, the frame **11** comprises a first side panel **11a** and a second side panel **11b**. The first side panel **11a** and the second side panel **11b** each have a through hole **113** disposed in communication with the accommodation chamber **R.** The positioning seat **111** is movably mounted in the accommodation chamber **R.** The coupling member **112** has one end thereof fastened to one side of the positioning seat **111** that faces toward the first side panel **11a**, and an opposite end thereof inserted through the through hole **113** of the first side panel **11a** to the outside of the frame **11** for the connection of a brake cable **2**. The brake cable **2** is connected to a brake lever **21** that is operable by a user to stretch or release the brake cable **2.** Instead of connecting the brake cable **2** to a brake lever **21,** the brake cable **2** can be connected to a brake pedal or other means capable of controlling the brake cable.

The first adjustment member **12** is rotatably mounted at the positioning seat **111** of the frame **11.** More specifically, the first adjustment member **12** comprises a pivot connection portion **121** that is pivotally connected to one side of the positioning seat **111** that faces toward the second side panel **11b**, enabling the first adjustment member **12** to be stably rotated relative to the positioning seat **111**. Alternatively, the first adjustment member **12** can be rotatably connected to the frame **11** using any known pivoting means (such as: axle bearing).

The first adjustment member **12** further comprises a gear **122** and a first threaded portion **123**. The second adjustment member **13** comprises a second threaded portion **131**. The second threaded portion **131** is threaded onto the first threaded portion **123.** Further, the pivot connection portion **121** and gear **122** of the first adjustment member **12** are disposed in the accommodation chamber **R** of the frame **11.** The first threaded portion **123** is located at one end of the first adjustment member **12** remote from the pivot connection portion **121**. The first threaded portion **123** is inserted through the through hole **113** of the second side panel **11b**, and suspended outside the frame **11** for enabling the second threaded portion **131** of the second adjustment member **13** to be threaded thereon. In this embodiment, the first threaded portion **123** is an outer thread, the second threaded portion **131** is an inner thread for threading onto the outer thread of the first threaded portion **123**. However, it is obvious to any person skilled in the art that the first threaded portion **123** can be made in the form of an inner thread, and the second threaded portion **131** can be made in the form of an outer thread for threading into the inner thread of the first threaded portion **123.**

The second adjustment member **13** further comprises a connection member **132** for the connection of a braking wire **B1** of a braking device **B**. The connection member **132** is mounted at one end of the second adjustment member **13** remote from the second threaded portion **131.** The second adjustment member **13** has an outer surface **133** that can be a planar surface or other non-arc surface. Further, this outer surface **133** is disposed perpendicular to the long axis of the frame **11.** The braking device **B** can be a conventional drum type brake connected to the connection member **132** of the second adjustment member **13** through a braking wire **B1**. When the braking wire **B1** is pulled by the connection member **132** of the second adjustment member **13**, the brake shoe of the braking device **B** is extended out to rub against the brake drum, producing a braking effect.

Further, the frame **11** provides a stop member **114** located at the first side panel **11a**. The stop member **114** is protruded from the first side panel **11a** into the accommodation chamber **R**. The automatic brake adjustment apparatus **1** further comprises an adjustment fork **14**, a pullback spring **15** and a holder shell **16**. The adjustment fork **14** is pivotally connected to the positioning seat **111** of the frame **11**, comprising an end portion **141** and an abutment edge **142.** The end portion **141** faces toward the gear **122** of the first adjustment member **12**. The abutment edge **142** faces toward the stop member **114**. The pullback spring **15** has two opposite ends thereof respectively connected to the positioning seat **111** and the adjustment fork **14**, and adapted to pull the end portion **141** of the adjustment fork **14** 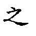 toward the positioning seat **111**. The holder shell **16** is abutted against the outer surface **133** of the second adjustment member **13** in a surface contact manner. Because the outer surface **133** is a planar surface or non-arc surface, the surface contact between the holder shell **16** and the outer surface **133** restricts the movement of the second adjustment member **13** to the direction along the long axis of the frame **11**, i.e., the second adjustment member **13** is prohibited from rotation relative to the frame **11.**

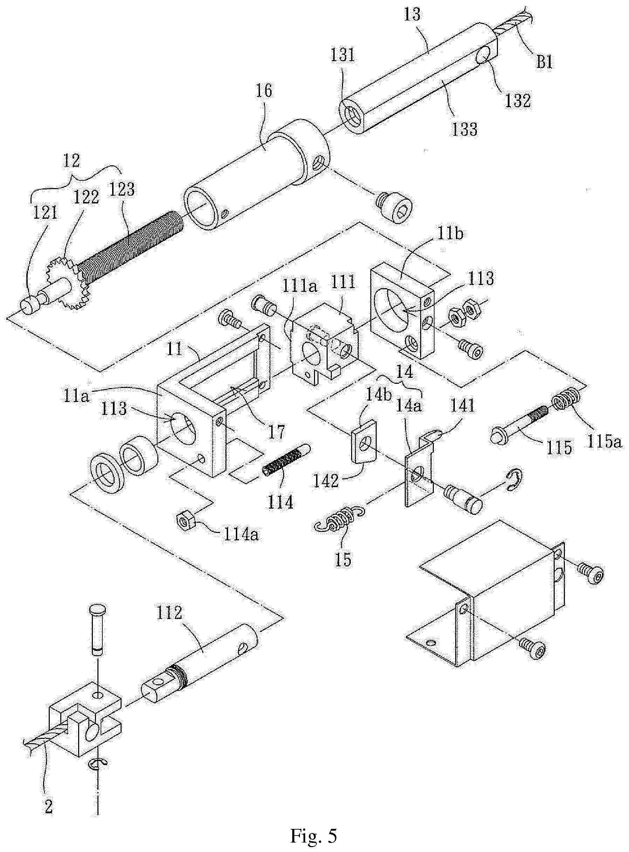

Referring to FIG. 5, the frame **11** provides a sliding guide **17**. The positioning seat **111** is slidably coupled to the sliding guide **17**, and thus, the positioning seat **111** is movably disposed in the accommodation chamber **R**. Preferably, the sliding guide **17** extends along the long axis of the frame **11** so that the positioning seat **111** is restricted by the sliding guide **17** to move along the long axis of the frame **11.** The sliding guide **17** shown in FIG. 5 can be made in the form of a sliding groove, and the positioning seat **111** can be configured to provide a protruding block **111a**. By means of coupling the protruding block **111a** to the sliding groove of the sliding guide **17**, the positioning seat **111** is slidably coupled to the sliding guide **17**. It is to be noted that in actual application, the sliding guide **17** can be made in the form of a sliding rail or other guiding design.

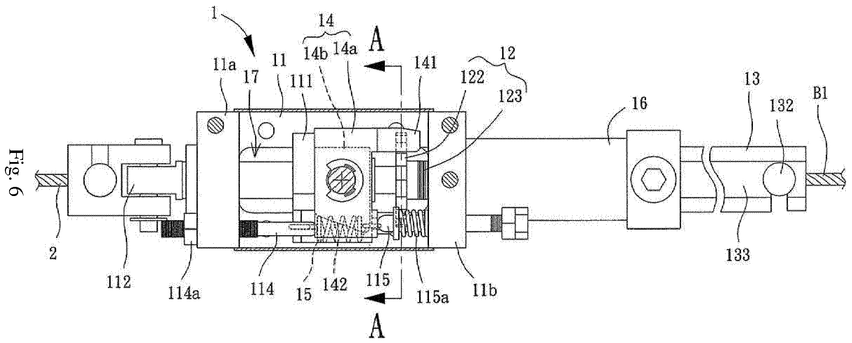

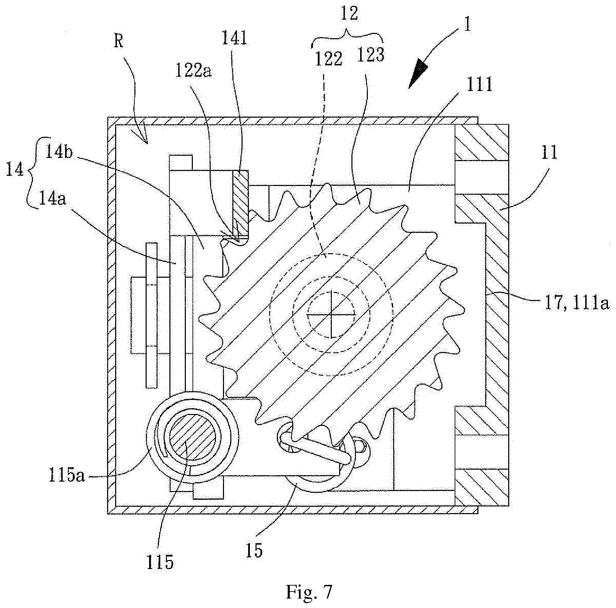

Referring to FIGS. 6 and 7, wherein FIG. 6 is a sectional view of the automatic brake adjustment apparatus **1** taken along the long axis; FIG. 7 is a sectional view of the automatically adjustment apparatus **1** taken along line A-A of FIG. 6. When the brake lever **21** is not operated by the user, the brake cable **2** renders no pulling force to the coupling member **112** of the frame **11**. At this time, the coupling member **112**, the positioning seat **111**, the first adjustment member 1**2** and the second adjustment member **13** are kept in a predetermined position, and the end portion **141** of the adjustment fork **14** is positioned in one tooth groove **122a** of the gear **122.**

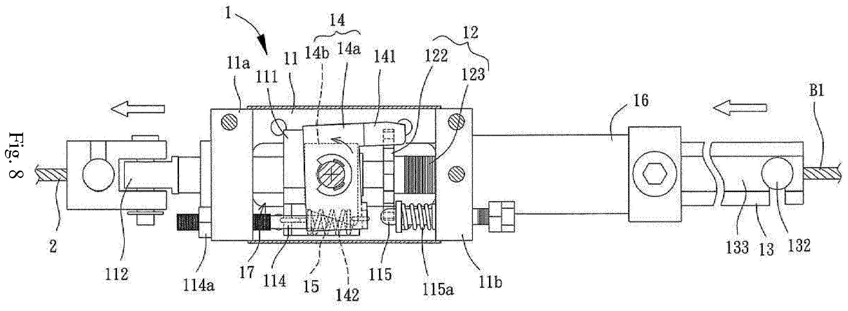

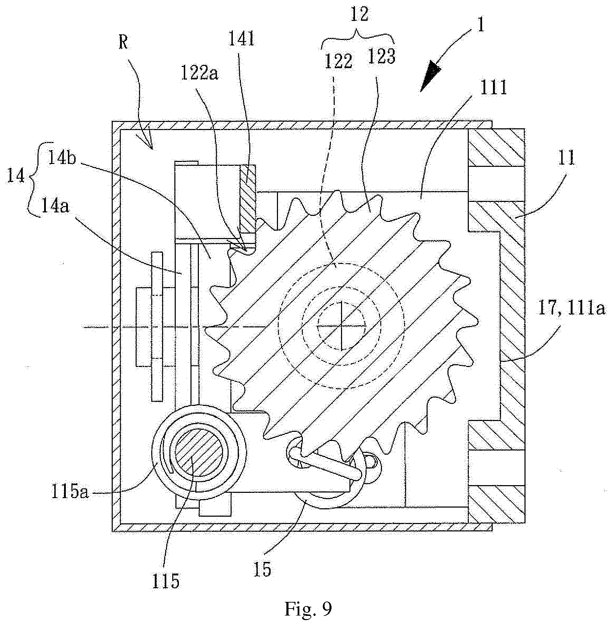

Referring to FIGS. 8 and 9, if the user operates the brake lever **21** to pull the brake cable **2** during the stage that the brake shoe of the braking device **B** does not wear off, i.e., the clearance between the brake shoe and brake drum of the braking device **B** is normal, the coupling member **112** will be driven to move the positioning seat **111**, the first adjustment member **12** and the second adjustment member **13** along the long axis of the frame **11** toward the brake cable **2** (i.e., toward the first side panel **11a** of the frame **11**). Because the adjustment fork **14** is pivotally coupled to the positioning seat **111**, the adjustment fork **14** will also be forced to move along the long axis of the frame **11** toward the first side panel **11a**. Further, because the abutment edge **142** of the adjustment fork **14** faces toward the stop member **114**, the stop member **114** will be forced to abut against the abutment edge **142** during movement of the adjustment fork **14** toward the first side panel **11a**, and thus, the adjustment fork **14** will be forced to rotate relative to the positioning seat **111**, moving the end portion **141** slightly upwardly away from the gear **122.** If the clearance between the brake shoe and brake drum of the braking device **B** is normal in this stage, the range in which the brake cable **2** is pulled is limited, and thus, the range of rotation of the adjustment fork **14** relative to the positioning seat **111** is minor and insignificant, in consequence, the upward movement of the end portion **141** is minor, i.e., the end portion **141** of the adjustment fork **14** is maintained positioned in the tooth groove **122a**. If the user releases the brake lever **21**, the coupling member **112**, the positioning seat **111**, the first adjustment member **12** and the second adjustment member **13** will be returned to the aforesaid predetermined position without causing any impact to the automatic brake adjustment apparatus **1.**

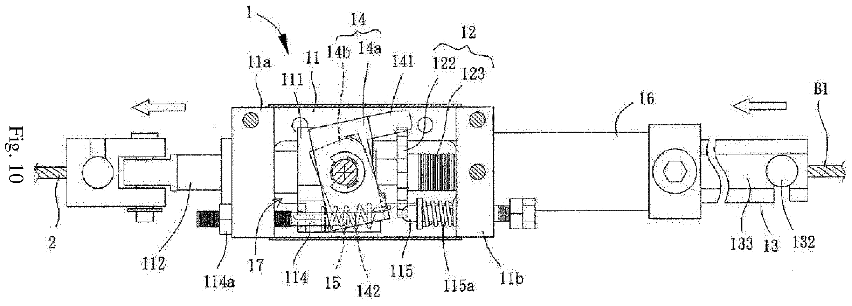

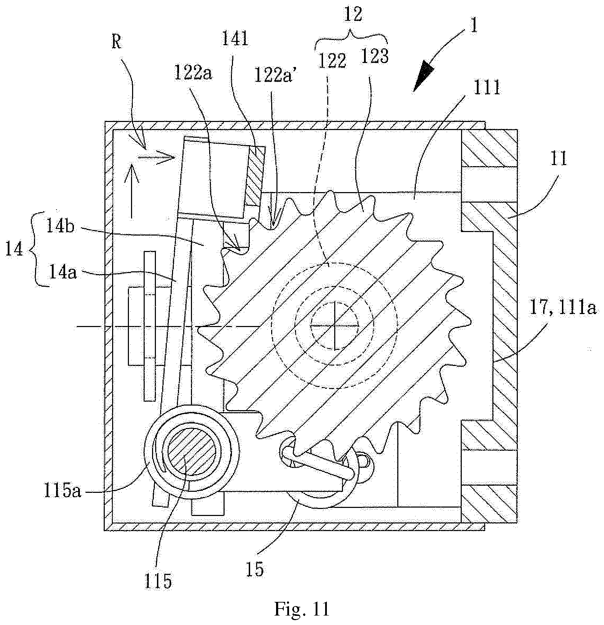

However, as shown in FIGS. 10 and 11, if the user operates the brake lever **21** to pull the brake cable **2** in the stage where the brake shoe of the braking device **B** starts to wear, i.e., the clearance between the brake shoe and brake drum of the braking device **B** is enlarged, the coupling member **112** will be driven to carry the positioning seat **111**, the first adjustment member **12** and the second adjustment member **13** along the long axis of the frame **11** toward the brake cable **2**, and the range of displacement of the coupling member **112**, the positioning seat **111**, the first adjustment member **12** and the second adjustment member **13** at this time will be relatively longer, thus, the range of rotation of the adjustment fork **14** relative to the positioning seat **111** will be relatively increased, causing the end portion **141** of the adjustment fork **14** to be moved upwardly out of the tooth groove **122a.**

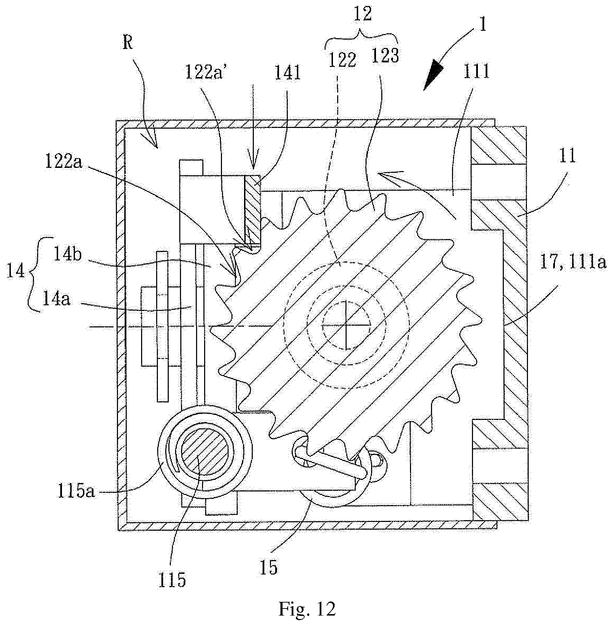

Referring to FIG. 11, the pullback spring **15** of the automatic brake adjustment apparatus **1** is adapted to pull the end portion **141** of the adjustment fork **14** in direction toward the positioning seat **111.** Thus, when the end portion **141** is disengaged from the tooth groove **122a,** it will be pulled by the pullback spring **15** to engage into a next tooth groove **122a'.** Thus, as shown in FIG. **12**, one the user releases the brake lever **21**, the coupling member **112**, the positioning seat **111**, the first adjustment member **12** and the second adjustment member **13** will be returned to the aforesaid predetermined position, and the end portion **141** will be forced to move the gear **122** downwards, biasing the gear **122** through an angle corresponding to one tooth groove, and thus, the end portion **141** will be positioned in a next tooth groove **122a'.** At this time, the first adjustment member **12** will be synchronously rotated with the gear **122**, threading the first threaded portion **123** of the first adjustment member **12** further into the second threaded portion **131** of the second adjustment member **13.** However, because the holder shell **16** is abutted against the outer surface **133** of the second adjustment member **13**, the second adjustment member **13** can simply be moved along the long axis of the frame **11**, and thus, the second adjustment member **13** cannot be rotated with the first adjustment member **12**. Therefore, the first threaded portion **123** will be rotated relative to the second threaded portion **131**, shortening the distance between the first adjustment member **12** and the second adjustment member **13**, and thus, the distance between the brake cable **2** and the braking wire **B1** of the braking device **B** will be shortened to achieve the effect of automatically adjusting the length of the braking wire **B1** in compensating for the enlargement of the clearance between the brake shoe and brake drum of the braking device **B.** Thus, the invention enables the clearance between the brake shoe and brake drum of the braking device **B** to be maintained constant.

Therefore, if the brake shoe of the braking device **B** is getting excessively worn out, the automatic brake adjustment apparatus **1** enables the pulling distance of the coupling member **112**, positioning seat **111**, first adjustment member **12** and second adjustment member **13** to be relatively increased, so that the adjustment fork **14** can be rotated relative to the frame **11** to move the end portion **141** upwardly away from the tooth groove **122a,** and the pullback spring **15** can pull back the adjustment fork **14** to have the end portion **141** be positioned in a next tooth groove **122a'.** Thus, when the user releases the brake lever **21**, the adjustment fork **14** can force the gear **122** to rotate, maintaining a constant clearance between the brake shoe and brake drum of the braking device **B.** Therefore, the automatic brake adjustment apparatus **1** of the present invention can maintain a constant clearance between the brake shoe and brake drum of the braking device B preventing the wearing status of the brake shoe from interfering with the braking force of the braking device **B**, and achieving the effect of enhancing vehicle safety.

Further, the automatic brake adjustment apparatus 1 can be connected to a brake cable 2 through the coupling member 112 of the frame 11, and then connected to a braking wire **B1** of a braking device **B** by means of the connection member 132 of the second adjustment member 13, so that the user can operate the brake lever **21** that is connected to the brake cable **2** to control the operation of the braking device **B.** In other words, by means of respectively connecting the frame **11** and the second adjustment member **13** to the brake cable **2** and the braking wire **B1**, the automatic brake adjustment apparatus **1** is installed in the braking device **B** for controlling the clearance between the brake shoe and brake drum of the braking device **B.** Therefore, the automatic brake adjustment apparatus **1** is applicable to any commercial drum type vehicle brake system. When compared to the conventional automatic brake adjustment apparatus **9** that needs to have the power drive **92** be mounted at swinging arm **821** of a specific braking device **8** and is not applicable to regular commercial vehicles, the automatic brake adjustment apparatus **1** of the invention greatly increases the application range.

It is to be noted that, in the present invention, the contained angle defined between the abutment edge **142** of the adjustment fork **14** and the long axis of the frame **11** is preferably smaller than **90°,** i.e., the abutment edge **142** is not kept perpendicular to the long axis of the frame **11** so that the abutment edge **142** defines a slope relative to the first side panel **11a** of the frame **11**. Thus, if the user heavily pulls the brake cable **2** (such as, in an emergency situation), the adjustment fork **14** can be excessively moved toward the first side panel **11.** At this time, the stop member **114** will be forced against the abutment edge **142** to bias the adjustment fork **14** relative to the positioning seat **111.** However, after the adjustment fork **14** is biased relative to the positioning seat **111** to a certain extent, the stop member **114** will be kept in parallel to the abutment edge **142**, limiting the angle of rotation of the adjustment fork **14** relative to the positioning seat **111** and effectively preventing the end portion **141** from being excessively moved in direction away from the gear **122** to affect the performance of the automatic brake adjustment apparatus **1.** Further, the adjustment fork **14** comprises a shifting piece **14a** and a stop block **14b** put together. The end portion **141** can be located at the shifting piece **14a**; the abutment edge **142** can be located at the stop block **14b**. Further, the shifting piece **14a** and the stop block **14b** can be respectively pivotally mounted at the positioning seat **111** of the frame **11**, facilitating the manufacturing and assembling of the adjustment fork **14.**

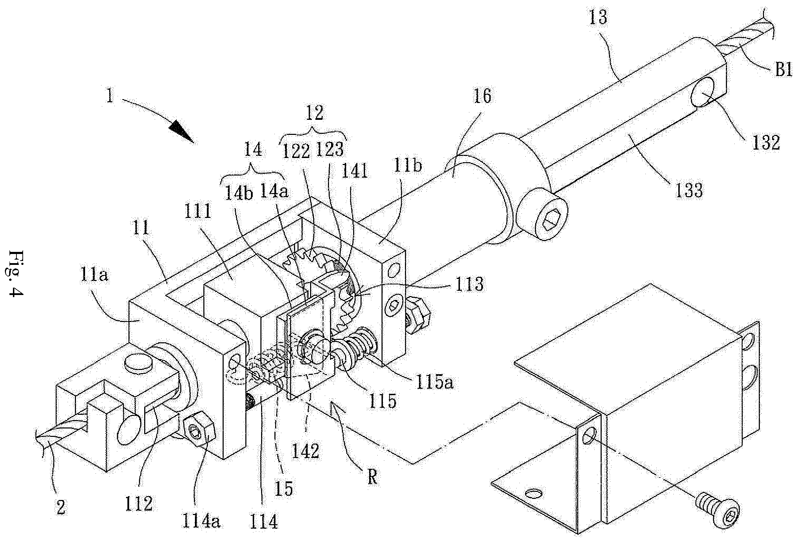

On the other hand, because different models and styles of drum type braking devices are commercially available for different models and types of vehicles, and the clearance between the brake shoe and the brake drum varies with different designs of drum type braking devices. In order to fit different drum type braking devices, as shown in FIGS. 4 and 5, the stop member **114** is configured to provide an adjustment component **114a** for adjusting the protruding distance of the stop member **114** in the accommodation chamber **R**, and thus, the user can adjust the distance in which the stop block **14b** is movable by the stop member **114** and the distance in which the end portion **141** of the adjustment fork **14** is to be lifted according to the clearance between the brake shoe and brake drum of the braking device. In other words, by means of the arrangement of the adjustment component **114a,** the user can determine the time to actuate the adjustment fork **14** for rotating the gear **122** in shortening the clearance between the brake shoe and brake drum of the braking device **B** according to the type of the drum type braking device.

Further, as shown in FIGS. 4 and 5, the frame **11** further comprises a pushing member **115** located at the second side panel **11b**. The pushing member **115** is protruded from the second side panel **11b** into the accommodation chamber **R**. Further, the pushing member **115** faces toward the adjustment fork **14.** Referring also to FIG. 10, when the user releases the brake lever **21**, the coupling member **112**, the positioning seat **111**, the first adjustment member **12** and the second adjustment member **13** will be returned to the predetermined position. At this time, the adjustment fork **14** and the pullback spring **15** generate an aligning torque, forcing the end portion **141** downwardly toward the gear **122**. However, because the aligning torque generated by the adjustment fork **14** and the pullback spring **15** can be affected by the braking wire **B1** of the braking device **B**, if the pulling force of the braking wire **B1** is insufficient, the aligning torque generated by the adjustment fork **14** and the pullback spring **15** can be relatively smaller, causing the adjustment fork **14** to slow down the rotating speed of the gear **122**. By means of the arrangement of the pushing member **115**, the pushing member **115** can be abutted against the adjustment fork **14** when the coupling member **112**, the positioning seat **111**, the first adjustment member **12** and the second adjustment member **13** are getting returned to the predetermined position, enhancing the generation of the aligning force of the adjustment fork **14**, and thus, the adjustment fork **14** can rapidly force the gear **122** to rotate, enabling the end portion **141** to be accurately positioned in the tooth groove **122a**, **122a**'.

Further, an elastic member **115a** can be set between the pushing member **115** and the second side panel **11b**. The elastic member **115a** can be a spring, or any other elastic structure adapted for compensating for the manufacturing tolerance or wear tolerance of the adjustment fork **14**, the coupling member **112**, the positioning seat **111** and the frame **11**. The elastic member **115a** enables the pushing member **115** to have a micro displacement space, preventing the pushing member **115** from being unable to abut against the adjustment fork **14**, or preventing the pushing member **115** from pushing the adjustment fork **14** excessively.

In conclusion, the invention provides an automatic brake adjustment apparatus practical for use in a car, motorcycle, bicycle, or any other vehicle for automatically adjusting the length of a braking wire of a braking device to further adjust the clearance between a brake shoe and a brake drum of the braking device, achieving the effect of enhancing vehicle safety and increasing the range of applications.

Although a particular embodiment of the present invention has been described in detail for purposes of illustration, various modifications and enhancements may be made without departing from the scope of the invention. Accordingly, the invention is not to be limited except as by the appended claims.

## Claims

1. An automatic brake adjustment apparatus (1) for automatically adjusting the length of a braking wire (B1) of a braking device (B), comprising:
a frame (11), said frame (11) comprising an accommodation chamber (R), a positioning seat (111) and a coupling member (112), said positioning seat (111) being movably mounted in said accommodation chamber (R);
a first adjustment member (12) rotatably mounted at said positioning seat (111) of said frame (11), said first adjustment member (12) comprising a gear (122) and a first threaded portion (123)
**characterised in that**
said frame (11) further comprises a stop member (114), said stop member (114) protruding into said accommodation chamber (R),
and the automatic brake adjustment apparatus (1) further comprises a second adjustment member (13) comprising a second threaded portion (131) meshed with said first threaded portion (123) and a connection member (132) connected to said braking wire (B1) of said braking device (B);
an adjustment fork (14) pivotally mounted at said positioning seat (111), said adjustment fork (14) comprising an end portion (141) facing toward said gear (122) of said first adjustment member (12) and an abutment edge (142) facing toward said stop member (114); and
a pullback spring (15), said pullback spring (15) having two opposite ends thereof respectively connected to said positioning seat (111) and said adjustment fork (14) and being adapted to pull said end portion (141) of said adjustment fork (14) in direction toward said positioning seat (111),
wherein said coupling member (112) having one end thereof connected to said positioning seat (111) and an opposite end thereof connected to a brake cable (2), and
wherein said stop member (114) comprises an adjustment component (114a) adapted for adjusting the protruding distance of said stop member (114) in said accommodation chamber (R).

2. The brake adjustment apparatus as claimed in claim 1, wherein said frame (11) comprises a first side panel (11a) and a second side panel (11b), said first side panel and said second side panel each having a through hole (113) located therein; said coupling member (112) has one end thereof connected to one side of said positioning seat (111) that faces toward said first side panel (11a), and an opposite end thereof inserted through the through hole (113) of said first side panel (11a) to the outside of said frame (11) for the connection of said brake cable (2).

3. The brake adjustment apparatus as claimed in claim 2, wherein said first adjustment member (12) comprises a pivot connection portion (121) pivotally connected to an opposite side of said positioning seat (111) that faces toward said second side panel (11b); said pivot connection portion (121) of said first adjustment member (12) and said gear (122) are disposed in said accommodation chamber (R) of said frame (11); said first threaded portion (123) is located at one end of said first adjustment member (12) remote from said pivot connection portion (121); said first threaded portion (123) is inserted through the through hole (113) of said second side panel (11b) to the outside of said frame (11) and meshed with said second threaded portion (131) of said second adjustment member (13).

4. The brake adjustment apparatus as claimed in claim 2, wherein said stop member (114) is located at said first side panel (11a); said stop member (114) is protruded from said first side panel into said accommodation chamber (R).

5. The brake adjustment apparatus as claimed in claim 1, wherein said end portion (141) of said adjustment fork (14) is positioned in one tooth groove (122a) of said gear (122).

6. The brake adjustment apparatus as claimed in claim 1, further comprising a holder shell (16), wherein said second adjustment member (13) comprising an outer surface (133) made in the form of a planar surface or non-arc surface and disposed perpendicular to a long axis of said frame (11); said holder shell (16) is abutted against said outer surface (133) of said second adjustment member (13) in a surface contact manner.

7. The brake adjustment apparatus as claimed in claim 6, wherein said abutment edge (142) of said adjustment fork (14) defines with said long axis of said frame (11) a contained angle smaller than 90-degrees.

8. The automatic brake adjustment apparatus as claimed in claim 7, wherein said adjustment fork (14) comprises a shifting piece (14a) and a stop block (14b) respectively pivotally connected to said positioning seat (111) of said frame (11); said end portion (141) is located at said shifting piece (14a); said abutment edge (142) is located at said stop block (14b).

9. The brake adjustment apparatus as claimed in any of claims 2-8, wherein said frame (11) further comprises a pushing member (115) located at said second side panel (11b) and protruded from said second side panel (11b) into said accommodation chamber (R), said pushing member (115) being disposed to face toward said adjustment fork (14).

## Patentansprüche

1. Vorrichtung zur automatischen Bremseneinstellung (1) zum automatischen Einstellen der Länge eines Bremskabels (B1) einer Bremsvorrichtung (B), umfassend:
einen Rahmen (11), wobei der Rahmen (11) eine Aufnahmekammer (R), einen Positioniersitz (111) und ein Koppelelement (112) umfasst, wobei der Positioniersitz (111) bewegbar in der Aufnahmekammer (R) montiert ist,
ein erstes Einstellelement (12), das drehbar an dem Positioniersitz (111) des Rahmens (11) montiert ist, wobei das erste Einstellelement (12) ein Zahnrad (122) und einen ersten Gewindeabschnitt (123) umfasst,
**dadurch gekennzeichnet, dass**
der Rahmen (11) ferner ein Anschlagelement (114) umfasst, wobei das Anschlagelement (114) in die Aufnahmekammer (R) ragt,
und wobei die Vorrichtung zur automatischen Bremseneinstellung (1) ferner ein zweites Einstellelement (13), das einen zweiten Gewindeabschnitt (131) umfasst, der mit dem ersten Gewindeabschnitt (123) verschraubt ist, und ein Verbindungselement (132) umfasst, das mit dem Bremskabel (B1) der Bremsvorrichtung (B) verbunden ist,
eine Einstellgabel (14), die drehbar an dem Positioniersitz (111) montiert ist, wobei die Einstellgabel (14) einen Endabschnitt (141), der zu dem Zahnrad (122) des ersten Einstellelements (12) gewandt ist, und einen Anschlagrand (142) umfasst, der zu dem Anschlagelement (114) gewandt ist, und
eine Rückzugsfeder (15), wobei die Rückzugsfeder (15) zwei gegenüber liegende Enden aufweist, die entsprechend mit dem Positioniersitz (111) und der Einstellgabel (14) verbunden sind und darauf ausgelegt sind, den Endabschnitt (141) der Einstellgabel (14) in die Richtung des Positioniersitzes (111) zu ziehen,
wobei das Koppelelement (112) ein Ende aufweist, das mit dem Positioniersitz (111) verbunden ist und ein gegenüber liegendes Ende, das mit einem Bremskabel (2) verbunden ist, und
wobei das Anschlagelement (114) eine Einstellkomponente (114a) umfasst, die darauf ausgelegt ist, den Überstand des Anschlagelements (114) in die Aufnahmekammer (R) einzustellen.

2. Vorrichtung zur automatischen Bremseneinstellung gemäß Anspruch 1, bei der der Rahmen (11) eine erste Seitenfläche (11a) und eine zweite Seitenfläche (11b) umfasst, wobei die erste Seitenfläche und die zweite Seitenfläche jeweils ein Durchgangsloch (113) haben, das darin angeordnet ist, wobei das Koppelelement (112) ein Ende aufweist, das mit einer Seite des Positioniersitzes (111) verbunden ist, die zu der ersten Seitenfläche (11a) zugewandt ist, und ein entgegenliegendes Ende, das durch das Durchgangsloch (113) der ersten Seitenfläche (11a) zu der Außenseite des Rahmens (11) zur Verbindung des Bremskabels (2) gesteckt ist.

3. Vorrichtung zur automatischen Bremseneinstellung gemäß Anspruch 2, bei der das erste Einstellelement (12) einen Drehverbindungsabschnitt (121) umfasst, der drehbar mit einer gegenüber liegenden Seite des Positioniersitzes (111) verbunden ist, die der zweiten Seitenfläche (11b) zugewandt ist, wobei der Drehverbindungsabschnitt (121) des ersten Einstellelements (12) und das Zahnrad (122) in der Aufnahmekammer (R) des Rahmens (11) angeordnet sind, wobei der erste Gewindeabschnitt (123) an einem Ende der ersten Einstellelements (12) entfernt von dem Drehverbindungsabschnitt (121) angeordnet ist, wobei der erste Gewindeabschnitt (123) durch das Durchgangsloch (113) der zweiten Seitenfläche (11b) zu der Außenseite des Rahmens (11) gesteckt ist und mit dem zweiten Gewindeabschnitt (131) des zweiten Einstellelements (13) verschraubt ist.

4. Vorrichtung zur automatischen Bremseneinstellung gemäß Anspruch 2, bei der das Anschlagelement (114) an der ersten Seitenfläche (11a) angeordnet ist, wobei das Anschlagelement (114) von der ersten Seitenfläche in die Aufnahmekammer (R) vorsteht.

5. Vorrichtung zur automatischen Bremseneinstellung gemäß Anspruch 1, bei der der Endabschnitt (141) der Einstellgabel (14) in einer Zahnnut (122a) des Zahnrads (122) angeordnet ist.

6. Vorrichtung zur automatischen Bremseneinstellung gemäß Anspruch 1, die ferner ein Halterungsgehäuse (16) umfasst, wobei das zweite Einstellelement (13) eine Außenfläche (133) umfasst, die in der Form einer planaren Fläche oder einer nichtbogenförmigen Fläche hergestellt ist und senkrecht zu einer langen Achse des Rahmens (11) angeordnet ist, wobei das Halterungsgehäuse (16) gegen die Außenfläche (133) des zweiten Einstellelements (13) in einer die Oberfläche kontaktierenden Weise anliegt.

7. Vorrichtung zur automatischen Bremseneinstellung gemäß Anspruch 6, bei der der Anschlagrand (142) der Einstellgabel (14) mit der langen Achse des Rahmens (11) einen eingeschlossenen Winkel definiert, der kleiner als 90 Grad ist.

8. Vorrichtung zur automatischen Bremseneinstellung gemäß Anspruch 7, bei der die Einstellgabel (14) ein Schiebeelement (14a) und einen Anschlagblock (14b) umfasst, die jeweils drehbar mit dem Positioniersitz (111) des Rahmens (11) verbunden sind, wobei der Endabschnitt (141) an dem Schiebeelement (14a) angeordnet ist und wobei der Anschlagrand (142) an dem Anschlagblock (14b) angeordnet ist.

9. Vorrichtung zur automatischen Bremseneinstellung gemäß einem der Ansprüche 2 bis 8, bei der der Rahmen (11) ferner ein Druckelement (115) umfasst, das an der zweiten Seitenfläche (11b) angeordnet ist und von der zweiten Seitenfläche (11b) in die Aufnahmekammer (R) vorsteht, wobei das Druckelement (115) angebracht ist, um der Einstellgabel (14) zugewandt zu sein.

## Revendications

1. Appareil de réglage automatique de frein (1) pour régler automatiquement la longueur d'un câble de freinage (B1) d'un dispositif de freinage (B), comprenant:
un châssis (11), ledit châssis (11) comprenant une chambre de réception (R), un siège de positionnement (111) et un élément de couplage (112), ledit siège de positionnement (111) étant monté de façon mobile dans ladite chambre de réception (R);
un premier élément de réglage (12) monté de façon rotative sur ledit siège de positionnement (111) dudit châssis (11), ledit premier élément de réglage (12) comprenant un engrenage (122) et une première partie filetée (123),
**caractérisé en ce que**
ledit châssis (11) comprend en outre un élément de butée (114), ledit élément de butée (114) faisant saillie à l'intérieur de ladite chambre de réception (R), et l'appareil de réglage automatique de frein (1) comprend en outre un second élément de réglage (13) comprenant une seconde partie filetée (131) engrenée avec ladite première partie filetée (123) et un élément de liaison (132) relié audit câble de freinage (B1) dudit dispositif de freinage (B);
une fourche de réglage (14) montée de façon pivotante dans ledit siège de positionnement (111), ladite fourche de réglage (14) comprenant une partie d'extrémité (141) tournée vers ledit engrenage (122) dudit premier élément de réglage (12) et un bord de butée (142) tourné vers ledit élément de butée (114); et
un ressort de rappel (15), ledit ressort de rappel (15) ayant ses deux extrémités opposées reliées respectivement audit siège de positionnement (111) et à ladite fourche de réglage (14) et étant adapté pour tirer ladite partie d'extrémité (141) de ladite fourche de réglage (14) en direction dudit siège de positionnement (111),
dans lequel ledit élément de couplage (112) a une extrémité de celui-ci reliée audit siège de positionnement (111) et une extrémité opposée de celui-ci reliée à un câble de frein (2), et
dans lequel ledit élément de butée (114) comprend un composant de réglage (114a) adapté pour régler la distance de saillie dudit élément de butée (114) dans ladite chambre de réception (R).

2. Appareil de réglage automatique de frein selon la revendication 1, dans lequel ledit châssis (11) comprend un premier panneau latéral (11a) et un second panneau latéral (11b), ledit premier panneau latéral et ledit second panneau latéral ayant chacun un trou traversant (113) situé dans celui-ci ; ledit élément de couplage (112) a une extrémité de celui-ci reliée à un côté dudit siège de positionnement (111) qui est tourné vers ledit premier panneau latéral (11a), et une extrémité opposée de celui-ci qui pénètre dans le trou traversant (113) dudit premier panneau latéral (11a) jusqu'à l'extérieur dudit châssis (11) pour la liaison dudit câble de frein (2).

3. Appareil de réglage automatique de frein selon la revendication 2, dans lequel ledit premier élément de réglage (12) comprend une partie de liaison à pivot (121) reliée de façon pivotante à un côté opposé dudit siège de positionnement (111) qui est tourné vers ledit second panneau latéral (11b); ladite partie de liaison à pivot (121) dudit premier élément de réglage (12) et ledit engrenage (122) sont disposés dans ladite chambre de réception (R) dudit châssis (11); ladite première partie filetée (123) est située à une extrémité dudit premier élément de réglage (12) distante de ladite partie de liaison à pivot (121); ladite première partie filetée (123) pénètre dans le trou traversant (113) dudit second panneau latéral (11b) jusqu'à l'extérieur dudit châssis (11) et s'engrène avec ladite seconde partie filetée (131) dudit second élément de réglage (13).

4. Appareil de réglage automatique de frein selon la revendication 2, dans lequel ledit élément de butée (114) est situé sur ledit premier panneau latéral (11a) ; ledit élément de butée (114) fait saillie depuis ledit premier panneau latéral à l'intérieur de ladite chambre de réception (R).

5. Appareil de réglage automatique de frein selon la revendication 1, dans lequel ladite partie d'extrémité (141) de ladite fourche de réglage (14) est positionnée dans une rainure à dents (122a) dudit engrenage (122).

6. Appareil de réglage automatique de frein selon la revendication 1, comprenant en outre une enveloppe de support (16), dans lequel le second élément de réglage (13) comprend une surface externe (133) réalisée sous la forme d'une surface plane ou d'une surface non arquée et disposée perpendiculairement à un axe long dudit châssis (11); ladite enveloppe de support (16) bute contre ladite surface externe (133) dudit second élément de réglage (13) par contact de surface.

7. Appareil de réglage automatique de frein selon la revendication 6, dans lequel ledit bord de butée (142) de ladite fourche de réglage (14) définit avec ledit axe long dudit châssis (11) un angle interne inférieur à 90 degrés.

8. Appareil de réglage automatique de frein selon la revendication 7, dans lequel ladite fourche de réglage (14) comprend une pièce de décalage (14a) et un bloc de butée (14b) reliés respectivement de façon pivotante audit siège de positionnement (111) dudit châssis (11); ladite partie d'extrémité (141) est située sur ladite pièce de décalage (14a); ledit bord de butée (142) est situé sur ledit bloc de butée (14b).

9. Appareil de réglage automatique de frein selon l'une quelconque des revendications 2 à 8, dans lequel ledit châssis (11) comprend en outre un élément de poussée (115) situé sur ledit second panneau latéral (11b) et faisant saillie depuis ledit second panneau latéral (11b) à l'intérieur de ladite chambre de réception (R), ledit élément de poussée (115) étant disposé de manière à être tourné vers ladite fourche de réglage (14).
